# EUROPÄISCHE PATENTSCHRIFT

(11) **EP 1 278 597 B1**
(45) Veröffentlichungstag und Bekanntmachung des Hinweises auf die Patenterteilung: **01.09.2004**
(21) Anmeldenummer: 01938042.7
(22) Anmeldetag: 24.03.2001
(51) Int. Cl.: B01J 8/44

(54) **BODENELEMENT FÜR EINE VORRICHTUNG ZUM BEHANDELN VON PARTIKELFÖRMIGEM GUT**
FLOOR ELEMENT FOR A DEVICE FOR TREATING PARTICULATE MATERIAL
ELEMENT FOND D'UN DISPOSITIF DE TRAITEMENT D'UN PRODUIT PARTICULAIRE

(30) Priorität: 29.03.2000 DE 10015597
(43) Veröffentlichungstag der Anmeldung: 29.01.2003
(73) Patentinhaber: Hüttlin GmbH, 79585 Steinen (DE)
(72) Erfinder: WERNER, Thomas, 79595 Rümmingen (DE); GROSS, Martin, 79585 Steinen (DE)
(74) Vertreter: Weller, Wolfgang, Dr.
(86) Internationale Anmeldenummer: PCT/EP2001/003379
(87) Internationale Veröffentlichungsnummer: WO 2001/072409

(56) Entgegenhaltungen:
- EP-A- 0 370 167
- EP-A- 0 512 147
- GB-A- 937 569
- US-A- 3 527 575
- US-A- 4 475 467
- US-A- 4 759 884
- PATENT ABSTRACTS OF JAPAN vol. 004, no. 111 (M-025), 9. August 1980 (1980-08-09) & JP 55 068506 A (BABCOCK HITACHI KK), 23. Mai 1980 (1980-05-23)

## Beschreibung

Die Erfindung betrifft ein Bodenelement für eine Vorrichtung zum Behandeln von partikelförmigem Gut, mit einem flächigen Boden, in dem zahlreiche Öffnungen vorgesehen sind, über die ein Behandlungsmedium durch den Boden führbar ist, und mit Mitteln, die dem durch den Boden strömenden Behandlungsmedium eine Bewegungskomponente in Richtung der Bodenebene auferlegen, wobei der Boden aus einem plattenförmigen Körper besteht, die Öffnungen im Boden in Form von Schlitzen bestehen, die durch Materialabtrag aus dem Material des Bodens entstanden sind, und wobei Öffnungsquerschnitte der Schlitze geneigt zur Bodenebene verlaufen, wodurch die Bewegungskomponente in Richtung der Bodenebene auferlegt wird.

Eine derartige Vorrichtung ist aus der US-A-4 475 467 bekannt.

Derartige Vorrichtungen dienen dazu, um ein partikelförmiges Gut zu trocknen, zu granulieren oder zu coaten.

Dabei wird bspw. ein gasförmiges Medium, sog. Prozessluft, über den Boden in eine Prozesskammer eingeführt und tritt dabei durch die zahlreichen Öffnungen im Boden etwa horizontal und umfänglich gerichtet in die Prozesskammer ein.

Derartige Vorrichtungen werden verbreitet in der pharmazeutischen Industrie eingesetzt, insbesondere um Arzneimittel als Pulver, Granulate und dergleichen herzustellen.

Dabei soll das Behandlungsergebnis möglichst gleichmäßig sein und die Apparaturen sollen, insbesondere im pharmazeutischen Bereich, einfach und effektiv gereinigt werden können.

Bei der Vorrichtung der eingangs genannten Art ist der Öffnungsquerschnitt der Schlitze derart aufgebaut, dass über den wesentlichen Teil der Dicke der Platte die Seitenwände parallel verlaufen, sich dann sehr stark verjüngen und sich dann wieder in einer Mündung mit parallelem, jedoch wesentlich geringerem Abstand untereinander zur Ausblasseite bzw. zum Produkt hin weiter erstrecken. Damit soll ein Düseneffekt erzielt werden.

Es ist Aufgabe der vorliegenden Erfindung, ein Bodenelement zu schaffen, das fertigungseinfach herstellbar ist, eine optimale Führung des Behandlungsmediums erlaubt und einfach und zuverlässig zu reinigen ist.

Erfindungsgemäß wird die Aufgabe dadurch gelöst, dass zur Verbesserung der Reinigung des Bodenelements der geneigte Öffnungsquerschnitt der Öffnungen in Richtung der Seite des Bodens, auf der das partikelförmige Gut zum Liegen kommt, sich zusätzlich noch laufend verjüngt.

Diese Maßnahmen haben fertigungstechnisch den Vorteil, dass lediglich ein flächiger Boden bereitgestellt werden muss, aus dessen Material dann die zahlreichen Schlitze durch Materialabtrag bewerkstelligt werden. Es ist nun möglich, die Anzahl, die Form, die Länge, die Breit, den Neigungswinkel und das Muster der Schlitze in Abhängigkeit des Behandlungsprozesses und des zu behandelnden Produktes auszuwählen. Die Bewegungskomponenten in Richtung der Bodenebene werden dadurch erzeugt, dass die Öffnungsquerschnitte der Schlitze entsprechend geneigt verlaufen.

Dies erlaubt nun eine wesentlich höhere Variabilität bezüglich der Prozeßluftführung. So kann nun beispielsweise eine große Anzahl relativ schmaler Schlitze vorgesehen sein, durch die dann die Prozeßluft gleichmäßig verteilt und in der entsprechenden Neigung bzw. in Richtung der Bodenebene gerichteten Bewegungskomponente ausgerichtet werden kann. Die zahlreichen relativ schmalen Schlitze verhindern, bis zu einer Gutgröße mit der Breite der Schlitze, ein Durchfallen des Gutes durch den Boden. Bei einem kreisförmigen oder ringförmigen Boden können dann in radial äußeren Bereichen entsprechend mehrere Schlitze ausgespart werden, um dadurch den höheren Umfangsweg in radial äußeren Bereichen auszugleichen.

Fertigungstechnisch ist ein derartiger Materialabtrag mit hoher Präzision rasch und einfach durchzuführen, beispielsweise durch Laserschneiden, Wasserstrahlschneiden, durch Kombinationen dieser Verfahren, durch Erosionsverfahren oder auch durch Fräsen.

Dieser einfache Aufbau erlaubt auch die Möglichkeit, für eine Apparatur unterschiedliche Bodenelemente bereitzustellen, so daß je nach Größe des partikelförmigen Gutes, sei es beispielsweise feinstäubiges Pulver oder im Zentimeterbereich liegende Tablettenoblongs, dieses optimal behandelt werden kann. Durch die einfache Konstruktion ist ein rasches Auswechseln des Bodenelements leicht möglich.

Auch die notwendige Reinigung, die insbesondere in der pharmazeutischen Technologie hohen Ansprüchen genügen muß, ist wesentlich erleichtert, da nicht eine Vielzahl an einzelnen zu einem überlappenden Kranz zusammengefügten Teilen vorliegt, sondern ein plattenförmiger Körper, in dem entsprechende Schlitze ausgespart sind.

In einer weiteren Ausgestaltung der Erfindung verlaufen die Schlitze geradlinig.

Derartige Schlitze sind fertigungstechnisch besonders einfach zu bewerkstelligen, und die geradlinige Geometrie der Schlitze erlaubt regelmäßige, insbesondere parallel ausgerichtete Schlitzmuster.

In weiteren Ausgestaltungen verlaufen die Schlitze gekrümmt.

Diese Maßnahme hat den Vorteil, daß auf einem Flächenelement durch die Krümmung längere Schlitze bewerkstelligt werden können als nur bei einem geradlinigen Schlitz, so daß diese Maßnahme besonders dann von Vorteil ist, wenn pro Flächenelement eine möglichst große Austrittsfläche bei bestimmten vorgegebenen Parametern, wie beispielsweise Schlitzbreite, bewerkstelligt werden soll.

In einer weiteren Ausgestaltung der Erfindung erstrecken sich die Schlitze zu einem mittigen Zentrum des Bodens hin.

Diese Ausrichtung ermöglicht auf dem Boden dann eine kreisförmige Luftführung gegebenenfalls unter Ausbildung eines toroidal rotierenden Bandes, eine Geometrie, die sich zur Behandlung von partikelförmigem Gut als sehr günstig herausgestellt hat.

In einer weiteren Ausgestaltung der Erfindung erstrecken sich bei einem kreisförmigen Boden die Schlitze radial.

Dieses Schlitzbild ermöglicht die zuvor erwähnte Ausbildung eines kreisförmigen toroidal rotierenden Materialbandes besonders günstig.

In einer weiteren Ausgestaltung sind umfänglich um so mehr Schlitze vorgesehen, je weiter radial diese vom Zentrum entfernt sind.

Diese Maßnahme hat den Vorteil, daß durch das Vorsehen der immer mehr Schlitze die Laufwegunterschiede zwischen radial weit innen umlaufenden Gutteilchen und radial weiter außen umlaufenden Gutteilchen ausgeglichen werden. Anders ausgedrückt, ein radial außen umlaufendes Gutteilchen überläuft etwa nach derselben Wegstrecke einen Schlitz wie ein radial innen umlaufendes Teilchen, und somit können die Teilchen gleichmäßig beschleunigt werden. Dies führt zu einer gleichmäßigen Gutbehandlung unabhängig davon, ob ein Gutteilchen radial weiter innen oder radial weiter außen bewegt wird.

In einer weiteren Ausgestaltung ist vorgesehen, daß im äußeren Umfangsbereich eine Reihe dicht aneinander liegender Schlitze vorhanden ist.

Diese Maßnahme hat den Vorteil, daß der kritische Übergangsbereich zwischen der äußeren Umfangskante des Bodens und dem diesen aufnehmenden Gehäuse durch die Vielzahl der Schlitze quasi frei geblasen wird, so daß ausgeschlossen ist, daß sich in diesem Eckbereich nach und nach Gut ansammelt.

In einer weiteren Ausgestaltung der Erfindung weist der Öffnungsquerschnitt parallel verlaufende Seitenwände auf.

Diese Maßnahme hat den Vorteil, daß ein besonders gleichmäßiger etwa bandförmiger Luftstrom aus dem Schlitz austritt, mit jeweils parallelen Begrenzungsflächen.

In einer weiteren Ausgestaltung der Erfindung weist der Öffnungsquerschnitt sich zu einer Seite des Bodens hin aufweitende Seitenwände auf.

Diese Maßnahme hat den Vorteil, daß, falls das gewünscht ist, je nach Ausrichtung sich verjüngende oder sich aufweitende Strahlbänder erzielt werden können.

Besteht die Aufweitung in Richtung des durchströmenden Behandlungsmediums, wird der Strahl aufgeweitet. Ist einmal ein Teilchen durch einen Schlitz durch den Boden hindurch gefallen, sperrt dann die sich verjüngende Seite der Öffnung vor einem Wiederdurchtritt des Teilchens, so daß es dann durch Abfallen aufgrund der Schwerkraft entfernt werden kann.

In einer weiteren Ausgestaltung der Erfindung ist vorgesehen, daß im Boden weitere Öffnungen zur Aufnahme von Sprühdüsen vorhanden sind.

Diese Maßnahme erlaubt dann ein zusätzliches Behandeln des Gutes mit einem flüssigen Sprühmedium, beispielsweise beim Coaten, direkt im Bereich des Bodens.

In einer weiteren Ausgestaltung der Erfindung sind im Bereich der weiteren Öffnung diese zumindest teilweise umgebende Schlitze im Boden vorhanden.

Diese Maßnahme hat den Vorteil, daß durch Vorsehen von Schlitzen im Umfeld dieser Öffnungen der Düsen optimale Strömungsbedingungen um die Düsen herum gezielt geschaffen werden können, so daß keine Materialanhäufungen im Unterdruckbereich in der Umgebung der Düsen auftreten können, die Umgebung also durch das Vorsehen dieser zusätzlichen Schlitze freigehalten wird. Dies ist eben deswegen möglich, da fertigungstechnisch sehr einfach diese zusätzlichen Schlitzöffnungen bewerkstelligt werden können.

In einer weiteren Ausgestaltung der Erfindung ist der Boden eben.

Diese Maßnahme hat den Vorteil, daß eine besonders homogene Oberfläche ohne mechanische Hindernisse für das Produkt vorliegt.

In einer weiteren Ausgestaltung der Erfindung ist der Boden konturiert.

Diese Maßnahme ist dann von Vorteil, wenn wellenartige Bewegungen erwünscht sind oder unerwünschte, durch entsprechend konturierte Böden ausgeglichen werden können.

Bei einer weiteren Ausgestaltung der Erfindung ist der Boden drehbar.

Diese Maßnahme hat den Vorteil, daß durch die Drehbewegung eine zusätzlicher Variationsparameter zur Verfügung steht, um das Gut zu bewegen. Ein Drehen eines solch einfachen Bauteils wie dem Bodenelement ist wesentlich leichter zu bewerkstelligen als ein Zusammenbau von verschiedenen Leitplatten.

In einer weiteren Ausgestaltung der Erfindung steht eine Mittellängslinie des Öffnungsquerschnitts unter einem spitzen Winkel zur Bodenebene, vorzugsweise im Bereich von 5° bis 85°, höchst vorzugsweise im Bereich von 30° bis 60°.

In diesen Winkelbereichen können für eine großen Bandbreite an zu behandelndem Gut optimale Behandlungsergebnisse erzielt werden.

In einer weiteren Ausgestaltung der Erfindung sind, in Erstreckungsrichtung der Schlitze gesehen, mehrere hintereinander angeordnet, die durch Materialbrücken voneinander getrennt sind.

Diese Maßnahme hat den Vorteil, daß zwar eine Vielzahl an Schlitzen vorgesehen werden kann, durch die dazwischen liegenden Materialbrücken aber eine ausreichende mechanische Stabilität des Bodens aufrecht erhalten bleibt.

In einer weiteren Ausgestaltung der Erfindung ist der Boden ringförmig und mittig, auf seiten des ausströmenden Behandlungsmedium ist ein Kegel vorgesehen.

Dieser Zusammenbau erlaubt die Ausbildung des toroidal rotierenden Bandes auf einem ringförmigen Boden in besonders günstiger Weise. Dieses kompakte Bauelement kann beispielsweise auch dazu herangezogen werden, um bestehende Anlagen, die nach diesem Prinzip arbeiten, umzurüsten.

Es versteht sich, daß die vorstehend genannten und die nachstehend noch zu erläuternden Merkmale nicht nur in den angegebenen Kombination sondern auch in anderen Kombination oder in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:
- Fig. 1: eine Draufsicht auf ein erfindungsgemäßes Bodenelement,
- Fig. la: eine vergrößerte Draufsicht in dem in Fig. 1 mit einem Kreis umgrenzten Bereich,
- Fig. 1b: eine vergrößerte ausschnittsweise Draufsicht in dem in Fig. 1 umgrenzten Ringsegmentbereich,
- Fig. 2: einen Schnitt längs der Linie II-II in Fig. 1,
- Fig. 3: eine der Schnittdarstellung von Fig. 2 vergleichbare Schnittdarstellung eines weiteren Ausführungsbeispiels mit einem konturierten Boden,
- Fig. 4: eine der Schnittdarstellung von Fig. 2 vergleichbare Darstellung einer weiteren Ausgestaltung eines Bodenelements mit gewelltem Boden,

- Fig. 5: eine Draufsicht auf ein Scheibensegment eines weiteren Ausführungsbeispiels eines erfindungsgemäßen Bodens mit verschiedenen Schlitzgeometrien,
- Fig. 6: eine der Fig. 2 entsprechende ausschnittsweise stark vergrößerte Schnittdarstellung, wobei auf der linken Seite ein Öffnungsquerschnitt mit parallel verlaufenden, auf der rechten Seite ein Öffnungsquerschnitt mit sich verjüngenden Seitenwänden dargestellt ist, und
- Fig. 7: stark schematisiert eine perspektivische Ansicht einer Vorrichtung zum Behandeln von partikelförmigem Gut, in der ein erfindungsgemäßes Bodenelement eingebaut ist.

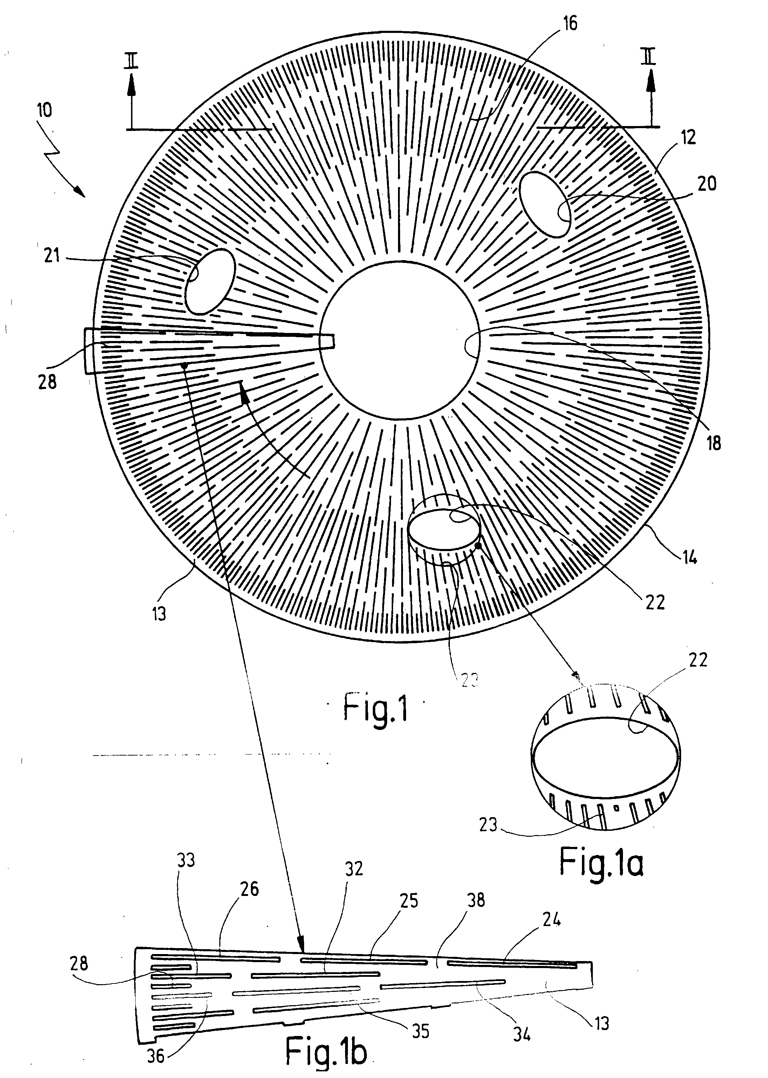

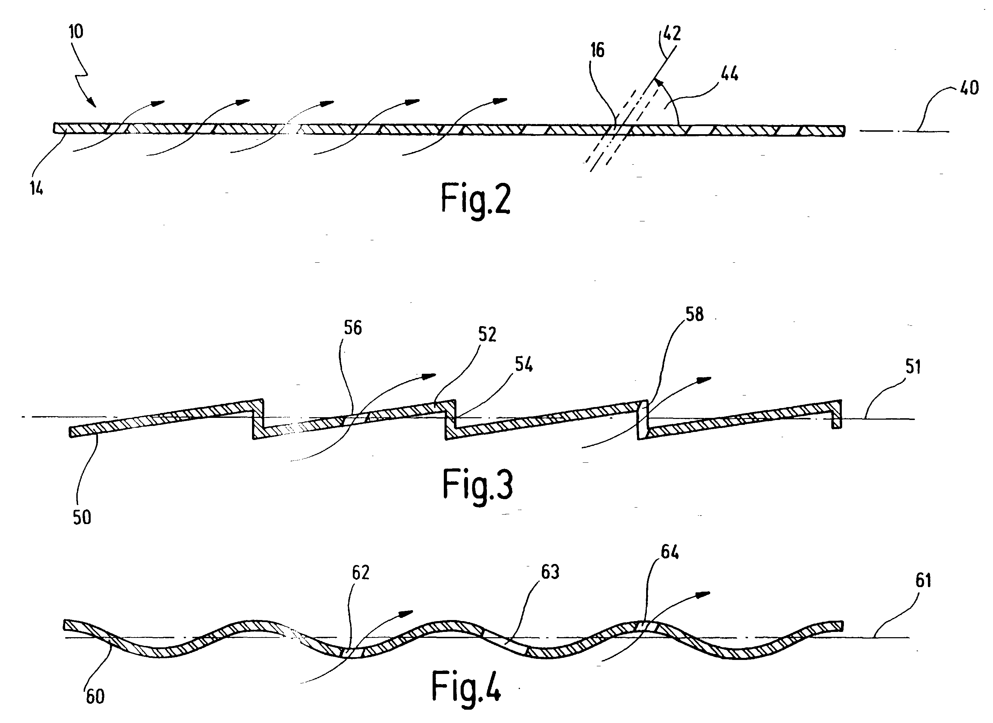

Ein in den Fig. 1 und 2 dargestelltes Bodenelement ist in seiner Gesamtheit mit der Bezugsziffer 10 bezeichnet.

Das Bodenelement 10 besteht aus einem flächigen Boden 12, der einen Körper 13 in Form einer Scheibe 14 aufweist. In dem Körper 13, der aus Metall besteht, sind über ein materialabtragendes Verfahren, nämlich mittels Laserschneiden, eine Vielzahl an Schlitzen 16 ausgespart, deren Ausgestaltung, Geometrie, Anordnung und dergleichen nachfolgend näher beschrieben wird.

In dem Körper 13 ist eine kreisrunde mittige Öffnung 18 vorgesehen.

Ferner sind drei weitere elliptische Öffnungen 20, 21, 22 gleichmäßig umfänglich etwa auf halber Radialbreite angeordnet, die dazu dienen, wie das später noch beschrieben wird, daß durch diese Düsen eingeschoben werden können.

Aus Fig. la ist ersichtlich, daß die Schlitze, hier stellvertretend der Schlitz 23, kurz vor den entsprechenden Öffnungen, hier der Öffnung 22, enden. Das Schlitzbild der Scheibe 14 soll anhand des Ringsegmentes näher beschrieben werden, das in Fig. 1 umgrenzt und in Fig. 1b größer dargestellt ist.

Von einem hier nicht näher bezeichneten mittigen Zentrum der Scheibe 14 aus erstrecken sich längs eines Radius drei geradlinige Schlitze 24, 25 und 26 hintereinander.

Die Schlitze 24 und 25 sind durch einen Materialsteg 38 voneinander getrennt, d.h. es ist nicht ein radial völlig durchgehender Schlitz vorhanden, sondern mehrere Schlitze hintereinander.

Dies dient dazu, um eine ausreichende mechanische Stabilität der Scheibe 14 aufrecht zu erhalten.

Im äußeren Umfangsendbereich ist eine umfänglich Reihe 28 an relativ kurzen Schlitzen ausgespart, die in kurzem Abstand vor der äußeren umfänglichen kreisförmigen Umfangskante der Scheibe 14 enden. Umfänglich benachbart zu der Reihe an den drei Schlitzen 24, 25 und 26 ist eine Reihe an zwei hintereinander angeordneten Schlitzen 32 und 33 vorgesehen. Diese Schlitze 32 und 33 erstrecken sich ebenfalls entlang eines Radius und sind untereinander durch eine hier nicht näher bezeichnete Materialbrücke getrennt. Die Anordnung und Längserstreckung ist derart, daß der Schlitz 32 sich über die Materialbrücke zwischen den benachbarten Schlitzen 25 und 26 hinüber erstreckt.

Der radial äußere Endbereich des Schlitzes 33 reiht sich in die umfängliche Reihe 28 an kurzen Schlitzen ein.

Benachbart zu der Schlitzreihe 32 und 33 ist dann wieder eine Reihe drei hintereinander längs eines Radius angeordneter Schlitze 34, 35 und 36 vorgesehen. Dieses Schlitzbild setzt sich dann umfänglich fort. In dem dargestellten Ausführungsbeispiel weist die Scheibe einen Durchmesser von etwa 30 cm auf, die Breite der Schlitze beträgt 0,2 mm, die Länge der Schlitze liegt im Bereich von etwa 32 mm bis 10 mm bei der umfänglichen Reihe 28 an kurzen Schlitzen. Die Schlitze sind etwa jeweils um 1° des Gesamtumfangwinkels von 360° untereinander versetzt, d.h. die äußere umfängliche Reihe besteht aus 360 Schlitzen. Die Schlitze enden jeweils etwa 2,5 mm vor der äußeren Umfangskante bzw. vor der mittigen Öffnung 18 bzw. vor den weiteren Öffnungen 20, 21 und 22.

Aus der Querschnittdarstellung von Fig. 2 ist zu erkennen, daß die Schlitze, dafür stellvertretend der Schlitz 16, so in den Körper 13 der Scheibe 14 eingeschnitten sind, daß deren Öffnungsquerschnitt 46 geneigt zur Bodenebene 40 verläuft. Im in Fig. 2 dargestellten Ausführungsbeispiel steht der Öffnungsquerschnitt 46, charakterisiert durch dessen Mittellängslinie 42, unter einem Winkel 44 von etwa 45° zur Bodenebene 40.

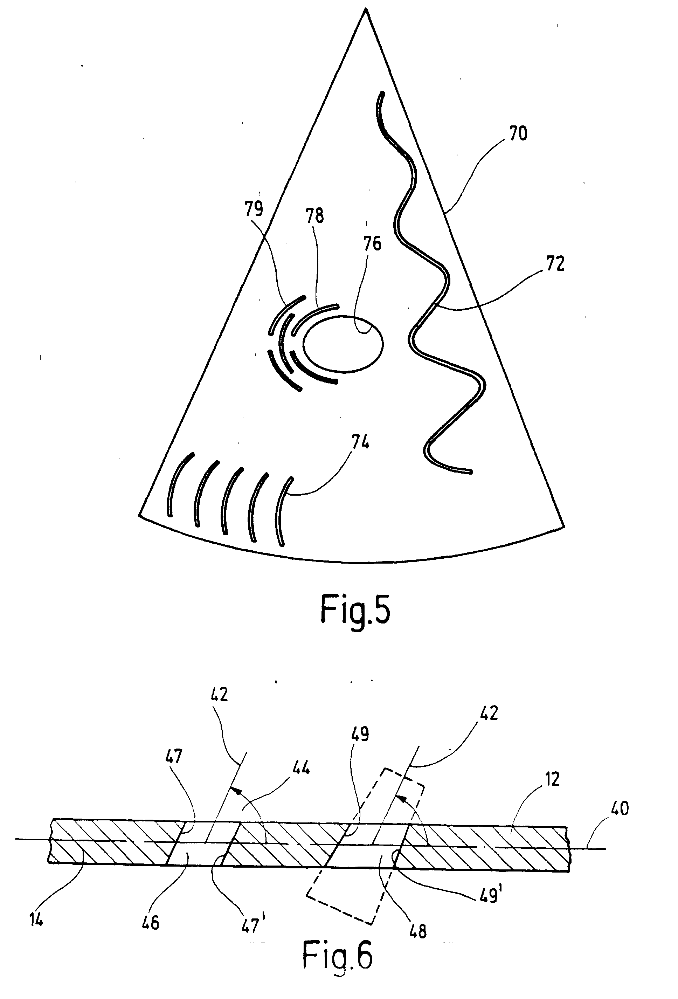

Der Öffnungsquerschnit ist in eine Richtung hin verjüngend, insbesondere konisch verjüngend, ausgebildet, wie das durch den Öffnungsquerschnitt 48 in Fig. 6 dargestellt ist. Der Öffnungsquerschnitt 48 ist nunmehr so, daß konische Seitenwände 49, 49' vorhanden sind. In Fig. 6 ist der Konus als gestrichelte Linie dargestellt. Die Konusachse erstreckt sich dann wieder längs der Mittellängslinie 42 und steht ebenfalls unter einem Winkel von 45° zur Bodenebene 40.

Wird daher das Bodenelement 10, wie das in Fig. 2 dargestellt ist, von unten nach oben durchströmt, wird dem Medium durch die geneigten Öffnungsquerschnitte eine Bewegungskomponente in Richtung der Bodenebene 40 auferlegt.

Anders ausgedrückt, das Medium strömt nicht von unten nach oben unter einem rechten Winkel zur Bodenebene 40 aus, sondern entsprechend der Neigung des Öffnungsquerschnitts geneigt.

Somit besteht die Möglichkeit, durch den Neigungswinkel des Öffnungsquerschnitts 46 entsprechend gewünschte Strömungsverhältnisse des durch das Bodenelement 10 durchtretenden Behandlungsmediums einzustellen. Je nach Einsatzgebiet kann dieses Behandlungsmedium gasförmig, flüssig, pulverförmig oder Mischungen davon sein.

Die Schlitze können durch ein Laserschneiden mit exakter Geometrie und exakten Maßen hergestellt werden, es können aber auch andere Verfahren, beispielsweise Wasserstrahlschneiden oder, bei entsprechend großer Schlitzbreite auch Fräsen herangezogen werden.

Das zuvor beschriebene Bodenelement 10 bestand aus einer ebenen Scheibe.

In Fig. 3 und 4 ist dargestellt, daß der Boden auch in gewissem Maße konturiert sein kann.

So besteht beispielsweise der in Fig. 3 dargestellte Boden 50 aus einer Anzahl von geneigten Abschnitten 52, die geneigt zur Bodenebene 51 verlaufen und die untereinander über stehende Abschnitte 54 verbunden sind. Diese Bodenkontur kann beispielsweise durch Prägen des Bodens 50 aus einer ursprünglich ebenen Platte mit einem Prägewerkzeug entstehen.

Die Schlitze können dann, je nachdem wie gewünscht, in den geneigten Abschnitten 52 vorgesehen sein, wie das beispielsweise durch den Schlitz 56 dargestellt ist, sie können aber auch in den stehenden Abschnitten 54 vorgesehen sein, wie das stellvertretend durch den Schlitz 58 dargestellt ist.

Auch hier ist der Öffnungsquerschnitt derart, daß dieser geneigt zur Bodenebene 51 verläuft, so daß auch hier einem durch die Schlitze 56 und 58 durchtretenden behandlungsmedium eine Bewegungskomponente in Richtung der Bodenebene 51 auferlegt wird, wie das durch die Strömungspfeile angedeutet ist.

Bei dem in Fig. 4 dargestellten Boden 60 ist dieser gewellt ausgebildet, d.h. die Bodenebene 61 wird durch Wellenberge und Wellentäler über- bzw. unterschritten. Auch hier sind wieder dann entsprechende Schlitze vorhanden, wobei diese in einem Wellental, wie das durch den Schlitz 62 dargestellt ist, im Übergangsbereich, wie das durch den Schlitz 63 dargestellt ist, oder in einem Wellenberg, wie das durch den Schlitz 64 dargestellt ist, vorgesehen sein können.

Auch hier ist wieder der Öffnungsquerschnitt derart, daß dieser geneigt zur Bodenebene 61 verläuft, so daß auch hier wieder dem durch die Schlitze 62, 63, 64 hindurchströmenden Behandlungsmedium eine in Richtung Bodenebene 61 gerichtete Bewegungskomponente auferlegt wird, wie das durch die Strömungspfeile angedeutet ist.

Auch die in diesem Ausführungsbeispiel dargestellten Schlitze können durch Laserschneiden oder dergleichen ausgespart werden. Es ist auch möglich, diese Schlitze, wenn es das Material und die Größe zuläßt, bereits beim Verformen der Böden auszustanzen.

In Fig. 5 ist ein Kreissegment eines scheibenförmigen Bodens 70 dargestellt, der ebenfalls eben ausgebildet ist.

Die sich zum hier nicht näher bezeichneten mittigen Zentrum erstreckenden Schlitze sind als wellenförmige Schlitze 72 ausgebildet, deren Welligkeit von der Mitte zum radial äußeren Ende hin zunimmt. Durch diese Zunahme der Welligkeit kann der radial nach außen immer größere Umfangslaufweg ausgeglichen werden.

In Fig. 5 ist ferner eine umfängliche relativ außen liegende Reihe an kurzen Schlitzen 74 dargestellt, die etwa kreisbogenförmig gekrümmt verlaufen. Diese Krümmung ist dann von Vorteil, wenn pro Flächenelement eine möglichst große Durchtrittsfläche bei jedoch relativ schmalem Schlitz gewünscht ist. Dies ist beispielsweise der Fall, wenn ein sehr feinkörniges Produkt behandelt wird, die Schlitze also dann möglichst schmal ausgebildet sein sollen, insbesondere auch, um zu verhindern, daß das Produkt durch die Schlitze hindurchfällt. Die Durchtrittsfläche durch einen gekrümmten Schlitz 74 ist größer als die Durchtrittsfläche durch einen entsprechenden gradlinigen Schlitz, der beispielsweise die beiden äußeren Enden der Krümmung geradlinig verbinden würde.

In dem in Fig. 5 dargestellten Kreissegment ist eine weitere Öffnung 76 ausgespart, durch die eine Düse eingeschoben werden kann.

In der Praxis hat sich gezeigt, daß um die Düsen herum aufgrund der hohen Austrittsgeschwindigkeit der versprühten Medien ein gewisses Vakuum entsteht, von dem Material angesaugt wird, insbesondere bei feinstäubigen Produkten, so daß dieser Nahbereich um die Düse oftmals verkrustet. Um dies zu verhindern, sind um die weitere Öffnung 76 herum eine Reihe diese in Sprührichtung teilweise umrundende Schlitze 78, 79 vorgesehen, die diesen kritischen Bereich "freiblasen". Dies zeigt besonders eindrucksvoll die hohe Variabilität und Flexibilität der Konstruktiven Ausgestaltung der Erfindung, d.h. es können gerade an den kritischen Bereichen entsprechende zusätzliche Schlitze vorgesehen werden, um Materialanhäufungen zu verhindern.

Dies ist auch der Grund für das Vorsehen der in Fig. 1 dargestellten umfänglichen Reihe 28 an kleinen Schlitzen.

Die Scheibe 14 ist in einem Gehäuse eingebaut, das sich etwa senkrecht zur Scheibe 14 erstreckt und mit deren Umfangskante in Verbindung steht. In diesem Eckenbereich neigt manchmal Produkt dazu, anzuhaften und zu verkrusten, was nun durch die umfängliche Reihe 28 ausgeschlossen wird, d.h. diese Ecke wird durch das die umfängliche Reihe 28 hindurchdrehende Medium dauernd freigeblasen.

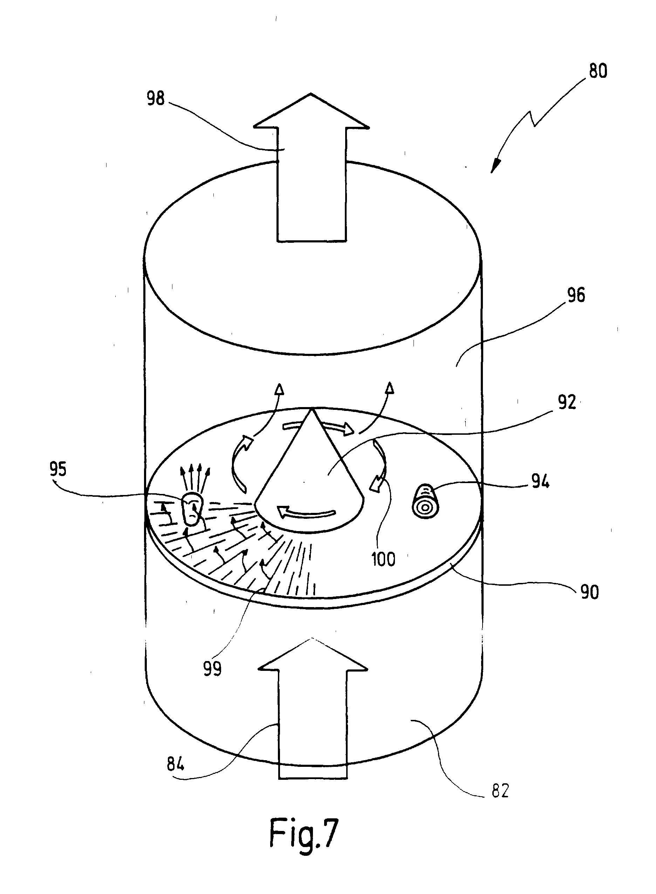

In Fig. 7 ist nun stark schematisiert eine Vorrichtung 80 dargestellt, in der ein erfindungsgemäßes Bodenelement 90 eingebaut ist, dessen Schlitzbild 99 in etwa dem Schlitzbild des Bodenelementes 10 entspricht.

Die Vorrichtung 80 weist eine untere Einströmkammer 82 auf, in die ein Behandlungsmedium 84, beispielsweise warme Prozeßluft, eingeführt wird.

Ein oberer Abschluß der Einströmkammer 82 bildet das Bodenelement 90 mit dem Schlitzbild 99. In die mittige Öffnung ist ein Kegel 92 eingesetzt, und zwar auf der Seite des Bodenelements 90, auf der das Behandlungsmedium 84 austritt.

Nur beispielhaft sind zwei diametral gegenüberliegende Düsen 94 und 95 vorgesehen, die in die zuvor beschriebenen weiteren Öffnungen eingeschoben sind. Der Neigungswinkel der Öffnungsquerschnitte des Schlitzbildes 99 ist nunmehr derart, daß dem durch das Bodenelement 90 hindurchströmenden Behandlungsmedium 84 eine ringförmige Bewegungskomponente im Uhrzeigersinn auferlegt wird. Oberhalb des Bodenelements 90 ist eine Behandlungskammer 96 vorhanden, in der das zu behandelnde Gut aufgenommen wird. Vom oberen Ende der Behandlungskammer wird dann die Prozeßluft nach der Behandlung des Gutes als Abluft 98 abgeführt. Die in solchen Apparaturen üblichen Filter und dergleichen sind der Übersichtlichkeit halber nicht dargestellt.

Wird die Vorrichtung beispielsweise zum Granulieren eines feinen Pulvers betrieben, wird dieses in die Behandlungskammer 96 gegeben und liegt zunächst auf dem Bodenelement 90. Durch die geringe Breite der Schlitze ist ausgeschlossen, daß das Produkt durch die Schlitze hindurch in die Einströmkammer 82 fällt. Wird das Bodenelement 90 mit Behandlungsmedium 84, beispielsweise heißer Prozeßluft, beaufschlagt, tritt diese durch das Schlitzbild 99 mit den unzähligen Schlitzen mit einer Horizontalkomponente umfänglich gerichtet durch das Bodenelement 90 durch und erzeugt ein auf einem über der Oberseite des Bodenelements 90 schwebendes und toroidal rotierendes Materialband, wie das durch die Pfeile 100 dargestellt ist. Durch die Düsen 94 und 95 wird dann ein flüssiges Mittel mit Klebeeigenschaften versprüht, wodurch das feine Pulver zu einem Granulat koaguliert.

## Patentansprüche

1. Bodenelement für eine Vorrichtung zum Behandeln von partikelförmigem Gut, mit einem flächigen Boden (12, 50, 60, 70), in dem zahlreiche Öffnungen vorgesehen sind, über die ein Behandlungsmedium (84) durch den Boden (12, 50, 60, 70) führbar ist, und mit Mitteln, die dem durch den Boden (12, 50, 60, 70) strömenden Behandlungsmedium (84) eine Bewegungskomponente in Richtung der Bodenebene (40, 51, 61) auferlegen, wobei der Boden (12, 50, 60, 70) aus einem plattenförmigen Körper (13) besteht, die Öffnungen im Boden (12, 50, 60, 70) in Form von Schlitzen (16, 23-26, 32-36, 56, 58, 62-64, 72, 74, 78, 79) bestehen, die durch Materialabtrag aus dem Material des Bodens (12, 50, 60, 70) entstanden sind, und Öffnungsquerschnitte (46, 48) der Schlitze geneigt zur Bodenebene (40, 51, 61) verlaufen, wodurch die Bewegungskomponente in Richtung der Bodenebene anferlegt wird, **dadurch gekennzeichnet, daß** zur verbesserung der Reinigung des Bodenelements der geneigte Öffnungsquerschnitt (48) der Öffnungen in Richtung der Seite des Bodens (12), auf der das partikelförmige Gut zum Liegen kommt, sich zusätzlich noch laufend verjüngt.

2. Bodenelement nach Anspruch 1, **dadurch gekennzeichnet, daß** die Schlitze (23-26, 32-36, 56, 58, 62, 63, 64) geradlinig verlaufen.

3. Bodenelement nach Anspruch 1, **dadurch gekennzeichnet, daß** die Schlitze (72, 74, 78, 79) gekrümmt verlaufen.

4. Bodenelement nach einem der Ansprüche 1 bis 3, **dadurch gekennzeichnet, daß** sich die Schlitze (16, 23-26, 32-36, 72) zu einem mittigen Zentrum des Bodens (12, 50, 60, 70) hin erstrecken.

5. Bodenelement nach einem der Ansprüche 1 bis 4, **dadurch gekennzeichnet, daß** bei einem kreisförmigen Boden (12, 50, 60, 70) die Schlitze (16, 23-26, 32-36) sich radial erstrecken.

6. Bodenelement nach Anspruch 4 oder 5, **dadurch gekennzeichnet, daß** umfänglich um so mehr Schlitze vorgesehen sind, je weiter radial diese vom Zentrum entfernt sind.

7. Bodenelement nach einem der Ansprüche 1 bis 6, **dadurch gekennzeichnet, daß** in einem äußeren Umfangsbereich des Bodens eine Reihe (28) dicht aneinander liegender Schlitze vorhanden ist.

8. Bodenelement nach einem der Ansprüche 1 bis 7, **dadurch gekennzeichnet, daß** im Boden (12) weitere Öffnungen (20-23, 76) zur Aufnahme von Sprühdüsen (94, 95) vorhanden sind.

9. Bodenelement nach Anspruch 8, **dadurch gekennzeichnet, daß** im Bereich der weiteren Öffnungen (76) diese zumindest teilweise umgebende Schlitze (78, 79) im Boden (70) vorhanden sind.

10. Bodenelement nach einem der Ansprüche 1 bis 9, **dadurch gekennzeichnet, daß** der Boden (12, 70) eben ist.

11. Bodenelement nach einem der Ansprüche 1 bis 9, **dadurch gekennzeichnet, daß** der Boden (50, 60) konturiert ist.

12. Bodenelement nach einem der Ansprüche 1 bis 11, **dadurch gekennzeichnet, daß** der Boden drehbar ist.

13. Bodenelement nach einem der Ansprüche 1 bis 12, **dadurch gekennzeichnet, daß** eine Mittellängsachse (42) des Öffnungsquerschnitts (46, 48) unter einem spitzen Winkel zur Bodenebene (40) steht, vorzugsweise im Bereich von 5° bis 85°, höchst vorzugsweise im Bereich von 30° bis 60°.

14. Bodenelement nach einem der Ansprüche 1 bis 13, **dadurch gekennzeichnet, daß** in Erstreckungsrichtung der Schlitze (24, 25, 26, 22, 33, 34, 35, 36) gesehen mehrere Schlitze hintereinander angeordnet sind, die durch Materialbrücken (38) voneinander getrennt sind.

15. bodenelement nach einem der Anspruche 1 bis 14, **dadurch gekennzeichnet, daß** der Boden (12) ringförmig ist und mittig auf seiten des ausströmenden Behandlungsmediums (84) mit einem Kegel (92) versehen ist.

## Claims

1. Bottom element for a device for treating particulate material, having a two-dimensional bottom (12, 50, 60, 70), in which are provided numerous apertures, via which a treatment medium (84) can be passed through the bottom (12, 50, 60, 70), and having means that impose a motion component in the direction of the plane (40, 51, 61) of the bottom on the treatment medium (84) flowing through the bottom, said bottom (12, 50, 60, 70) is a plate-shaped body (13), said apertures in the bottom (12, 50, 60, 70) are in the form of slots (16, 23-26, 32-36, 56, 58, 62-64, 72, 74, 78, 79) which have been formed by removal of material from the bottom (12, 50, 60, 70), and wherein aperture cross-sections (46, 48) of the slots slope relative to the plane (40, 51, 61) of the bottom, **characterized in that** for improving the cleaning of the bottom element the sloped aperture cross-section (48) of the apertures further consecutively tapers to a direction of a side of said bottom (12) on which said particulate material rests.

2. Bottom element of claim 1, **characterized in that** the slots (23-26, 32-36, 56, 58, 62, 63, 64) run in a straight line.

3. Bottom element of claim 1, **characterized in that** the slots (72, 74, 78, 79) are curved.

4. Bottom element of anyone of claims 1 through 3, **characterized in that** the slots (16, 23-26, 32-36, 72) extend toward a central center of the bottom (12, 50, 60, 70).

5. Bottom element of anyone of claims 1 through 4, **characterized in that**, in the case of a circular bottom (12, 50, 60, 70), the slots (16, 23-26, 32-36) extend radially.

6. Bottom element of claims 4 or 5, **characterized in that** the further away that slots are from the center, the more of said slots are present viewed in a circumferential direction.

7. Bottom element of anyone of claims 1 through 6, **characterized in that** there is a row (28) of slots like close together in an outer circumferential region of said bottom.

8. Bottom element of anyone of claims 1 through 7, **characterized in that** additional openings (20-23, 76) are provided in the bottom (12) for accommodating spray nozzles (94, 95).

9. Bottom element of claim 8, **characterized in that** there are further slots (78, 79) provided in the bottom (70) that at least partially surround the further openings (76) in the region of these further openings.

10. Bottom element of anyone of claims 1 through 9, **characterized in that** the bottom (12, 70) is flat.

11. Bottom element of anyone of claims 1 through 9, **characterized in that** the bottom (50, 60) is contoured.

12. Bottom element of anyone of claims 1 through 11, **characterized in that** the bottom is rotatable.

13. Bottom element of anyone of claims 1 through 12, **characterized in that** a longitudinal center line (42) of the aperture cross-sections (46, 48) is at an acute angle to said plane (40) of the bottom, preferably in the range of 5° to 85°, most preferably in the range of 30° to 60°.

14. Bottom element of anyone of claims 1 through 13, **characterized in that** a plurality of slots, which are separated from another by bridges (38) of material, are arranged in series as seen in the direction of extension of the slots (24, 25, 26, 22, 33, 34, 35, 36).

15. Bottom element of anyone of claims 1 through 14, **characterized in that** the bottom (12) is angular and is provided centrally with a cone (92) on the side of the outflowing treatment medium (84).

## Revendications

1. Elément de fond pour un dispositif destiné au traitement de produit particulaire, comprenant un fond (12, 50, 60, 70) plan, dans lequel sont prévues de nombreuses ouvertures par lesquelles un agent de traitement (84) peut être guidé à travers le fond (12, 50, 60, 70), et des moyens qui imposent à l'agent de traitement (84) circulant à travers le fond (12, 50, 60, 70) une composante de déplacement en direction du plan du fond (40, 51, 61), le fond (12, 50, 60, 70) se composant d'un corps (13) en forme de plaque, les ouvertures dans le fond (12, 50, 60, 70) se présentant sous la forme de fentes (16, 23-26, 32-36, 56, 58, 62-64, 72, 74, 78, 79) qui se sont formées par usure de matériau à partir du matériau du fond (12, 50, 60, 70), et des sections d'ouverture (46, 48) des fentes étant agencées de façon inclinée par rapport au plan du fond (40, 51, 61), ce qui fait que la composante de mouvement en direction du plan du fond est imposée, **caractérisé en ce que**, pour améliorer le nettoyage de l'élément de fond, la section d'ouverture (48) inclinée des ouvertures se rétrécit encore en supplément en direction du côté du fond (12), sur lequel le produit particulaire vient se reposer.

2. Elément de fond selon la revendication 1,
**caractérisé en ce que** les fentes (23-26, 32-36, 56, 58, 62, 63, 64) sont agencées en ligne droite.

3. Elément de fond selon la revendication 1,
**caractérisé en ce que** les fentes (72, 74, 78, 79) sont disposées de façon incurvée.

4. Elément de fond selon l'une quelconque des revendications 1 à 3, **caractérisé en ce que** les fentes (16, 23-26, 32-36, 72) s'étendent en direction d'un centre centré du fond (12, 50, 60, 70).

5. Elément de fond selon l'une quelconque des revendications 1 à 4, **caractérisé en ce que** les fentes (16, 23-26, 32-36) s'étendent radialement dans le cas d'un fond (12, 50, 60, 70) de forme circulaire.

6. Elément de fond selon la revendication 4 ou 5, **caractérisé en ce qu'**il est prévu sur le pourtour d'autant plus de fentes que celles-ci sont davantage éloignées radialement du centre.

7. Elément de fond selon au moins l'une quelconque des revendications 1 à 6, **caractérisé en ce qu'**une rangée (28) de fentes juxtaposées de façon dense est présente dans une zone périphérique extérieure du fond.

8. Elément de fond selon au moins l'une quelconque des revendications 1 à 7, **caractérisé en ce que** d'autres ouvertures (20-23, 76) pour le logement de buses de pulvérisation (94, 95) sont présentes dans le fond (12).

9. Elément de fond selon la revendication 8,
**caractérisé en ce que** ces fentes (78, 79) entourant au moins partiellement sont présentes dans le fond (70) dans la zone des autres ouvertures (76).

10. Elément de fond selon l'une quelconque des revendications 1 à 9, **caractérisé en ce que** le fond (12, 70) est plan.

11. Elément de fond selon l'une quelconque des revendications 1 à 9, **caractérisé en ce que** le fond (50, 60) est profilé.

12. Elément de fond selon l'une quelconque des revendications 1 à 11, **caractérisé en ce que** le fond est rotatif.

13. Elément de fond selon l'une quelconque des revendications 1 à 12, **caractérisé en ce qu'**un axe longitudinal médian (42) de la section d'ouverture (46, 48) forme un angle aigu avec le plan du fond (40), de préférence dans la plage de 5° à 85°, et avec une préférence maximale de 30° à 60°.

14. Elément de fond selon l'une quelconque des revendications 1 à 13, **caractérisé en ce que** plusieurs fentes, qui sont séparées les unes des autres par des ponts de matériau (38), sont disposées derrière les unes derrière les autres, vues dans le sens d'étirement des fentes (24, 25, 26, 22, 33, 34, 35, 36).

15. Elément de fond selon l'une quelconque des revendications 1 à 14, **caractérisé en ce que** le fond (12) a une forme annulaire et est pourvu d'une cône (92) au centre du côté de l'agent de traitement (84) qui s'évacue.
